# EUROPÄISCHE PATENTSCHRIFT

(11) **EP 0 829 379 B1**
(45) Veröffentlichungstag und Bekanntmachung des Hinweises auf die Patenterteilung: **02.01.2003**
(21) Anmeldenummer: 97111558.9
(22) Anmeldetag: 08.07.1997
(51) Int. Cl.: B60B 33/02

(54) **Bremsvorrichtung**
Braking device
Dispositif de freinage

(30) Priorität: 17.07.1996 DE 19628701
(43) Veröffentlichungstag der Anmeldung: 18.03.1998
(73) Patentinhaber: HEINRICH BLICKLE GmbH & Co.KG, D-72348 Rosenfeld (DE)
(72) Erfinder:
(74) Vertreter: Säger, Manfred, Dipl.-Ing.

(56) Entgegenhaltungen:
- DE-A- 1 778 523
- DE-U- 29 602 066
- US-A- 3 162 888
- US-A- 4 248 445
- US-A- 5 328 000

## Beschreibung

Die Erfindung betrifft eine Lenk- oder Bockrolle gemäß dem Oberbegriff des Anspruchs 1, wie sie aus der DE-U-29602066 bekannt geworden ist.

Bekannte Lenk- oder Bockrollen zum Bremsen von Bockrollen weisen üblicherweise ein Bremselement auf, das verschwenkbar bzw. senkrecht zum Umfang des Rades verschiebbar gelagert und mit einem Bremsbacken versehen ist. Das Bremselement wird durch eine von radial außen auf das Bremselement gerichtete Betätigungskraft betätigt, wodurch das Bremselement mit seinem Bremsbacken gegen die Umfangsfläche des Rades gedrückt und in seiner Stellung fixiert wird. Der gegen die Umfangsfläche des Rades gedrückte Bremsbacken erzeugt mit dieser einen Reibschluß, so daß auf das Rad ein Bremsmoment ausgeübt wird. Das Bremsmoment ist etwa proportional zur Betätigungskraft, mit welcher das Bremselement gegen das Rad gedrückt wird. Zur Erzielung einer hohen Bremskraft muß eine entsprechend große Betätigungskraft aufgebracht werden.

Derartige Rollen sind bspw. an fahrbaren Paletten, Gerüsten usw. angebracht. Fahrbare Paletten werden zum Transport unterschiedlichster Waren verwendet. Sind solche fahrbaren Paletten mit schwerem Gut beladen und sollen sie an einer Rampe oder dergleichen abgestellt werden, so ist ein erhebliches Bremsmoment erforderlich. Dieses Bremsmoment setzt bei den bekannten Lenk- oder Bockrollen eine entsprechend große Betätigungskraft voraus, die oftmals nur sehr schwer oder kaum aufgebracht werden kann.

Der Erfindung liegt die Aufgabe zugrunde, eine solche Bremsvorrichtung für eine gattungsgemäße Bock- oder Lenkrolle gemäß dem Oberbegriff des Hauptanspruches zu schaffen, die ein hohes Bremsmoment bei geringer Betätigungskraft erzeugt und einfach und kostengünstig herstellbar ist.

Diese Aufgabe wird bei einer Rolle gemäß dem Oberbegriff des Anspruchs 1 erfindungsgemäß durch dessen kennzeichnende Merkmale gelöst. Vorteilhafte Ausgestaltungen sind in den Unteransprüchen gekennzeichnet.

Die erfindungsgemäße Lenk- oder Bockrolle weist eine C-Förmige Feder auf, die mittels ihres Enden befestigt ist.

Die Erfindung wird beispielhaft anhand der Zeichnungen näher erläutert. Es zeigen:
- Fig. 1: eine erste Ausführungsform einer Bockrolle in Seitenansicht mit einer erfindungsgemäßen, ausgerückten Bremsvorrichtung, und
- Fig. 2: die in Fig. 1 gezeigte Bockrolle in Seitenansicht mit eingerückter Bremsvorrichtung,

Die erfindungsgemäße Bockrolle kann für fahrbare Paletten, Gerüste oder dgl. verwendet werden.

Die an sich bekannten Bockrollen weisen ein Rollengehäuse 1 und ein darin drehbar gelagertes Rad 2 auf. Das Rollengehäuse 1 weist einen umgekehrt U-förmigen Querschnitt mit einer Bodenplatte 3 und zwei seitlichen, sich von der Bodenplatte 3 nach unten erstreckenden Seitenwandungen 4 auf. Am unteren Endbereich der Seitenwandungen 4 erstreckt sich eine Achse oder Welle 5 zwischen den beiden Seitenwandungen 4, auf welcher das Rad 2 drehbar gelagert ist.

Die Bockrolle wird mit einer von dem Rad 2 abgewandten Anlagefläche 6 der Bodenplatte 3 an einem Fahrzeug, einer Palette, einem Gerüst oder dgl. angeflanscht.

Eine zu dem Rad 2 zeigende Innenfläche 7 der Bodenplatte 3 begrenzt mit einer Lauffläche 8 des Rades 2 einen Zwischenraum, in dem eine als Bremselement dienende Bügelfeder 10 angeordnet ist. Die Bügelfeder 10 ist aus einem Federblechstreifen ausgebildet, der an seinen beiden Endbereichen 11 um etwa 180° umgebogen ist. In die Endbereiche 11 ist jeweils ein Loch eingebracht, das jeweils von einer Niete 15 durchgriffen wird, mit welcher die Bügelfeder 10 an der Bodenplatte 3 befestigt ist. Die Bügelfeder 10 weist in der Seitenansicht eine langgestreckte, etwa ovale Form mit zwei Biegungen 12 und einem etwa geradlinigen Bremssteg 13 auf. Die Form der Bügelfeder 10 ist spiegelsymmetrisch zu einer vertikalen Mittelebene 16 der Bockrolle. An den Bremssteg 13 sind nach unten in Richtung zur Lauffläche 8 des Rades 2 zwei nutförmige Bremsbacken 17, 18 angeformt, die jeweils eine Bodenwandung 20 und eine innere und äußere Seitenwandung 21, 22 aufweisen. Die Bremsbacken 17, 18 sind symmetrisch und mit geringem Abstand zur Mittelebene 16 angeordnet. Die Bodenwandungen 20 bilden mit ihren zur Lauffläche 8 nach unten zeigenden Oberflächen jeweils eine Bremsfläche 20a und verlaufen in Richtung zur Mittelebene 16 leicht ansteigend, so daß sie etwa parallel zur Lauffläche 8 der Rolle 2 angeordnet sind. In der Mitte des Bremssteges 13 ist ein Langloch 24 eingebracht, das senkrecht zur Mittelebene 16 angeordnet ist.

Die Bodenplatte 3 weist mittig eine kreisförmige Öffnung auf, an der nach unten vorstehend eine Führungsbuchse 26 angeformt ist. In die Führungsbuchse 26 ist ein etwa zylinderförmiger Stößel 27 eingesetzt, der von einer vertikalen Bohrung 28 durchsetzt ist und an seinem oberen Endbereich einen radial vorstehenden Stegkragen 29 aufweist. In der Bohrung 28 ist ein Gewindeabschnitt 30 ausgebildet, der einen etwas geringeren Durchmesser als die übrige Bohrung 28 aufweist und vom unteren Ende des Stößels 27 etwas nach oben versetzt angeordnet ist. In den Gewindeabschnitt 30 ist von unten eine Schraube 31 eingeschraubt und eine Hülse 32 eingesetzt. Die Schraube 31 und die Hülse 32 durchgreifen das Langloch 24 der Bügelfeder 10, wobei die Hülse 32 so lang bemessen ist, daß die Schraube 31 mit ihrem Kopf nicht die Bügelfeder 10 an dem Stößel 27 festklemmt, vielmehr die Bügelfeder 10 quer zur Mittelebene 16 verschiebbar angeordnet ist. Zwischen der Bügelfeder 10 und dem Stößel ist vorzugsweise eine Beilagscheibe 33 eingebracht.

Die Bügelfeder 10 drückt den Stößel 27 vertikal nach oben gegen einen Nocken 35. Der Nocken 35 ist seitlich versetzt von einer Längsmittelachse 36 des Stößels 27 um eine Schwenkachse 37 schwenkbar gelagert. Der Nocken 35 weist einen in der Seitenansicht etwa rechteckigen, sich über den Stößel 27 erstreckenden Nockenkörper 38 auf, an dem an seiner unteren Längsseitenkante eine erste Steuerkante 39 und an seiner von der Schwenkachse 37 entfernten Stirnkante eine zweite Steuerkante 40 ausgebildet ist. Die beiden Steuerkanten 39, 40 stoßen an einer Steuerkantenecke 41 aneinander und begrenzen einen stumpfen Winkel von etwa 110°.

Nachfolgend wird die Funktionsweise der erfindungsgemäßen Bremse erläutert.

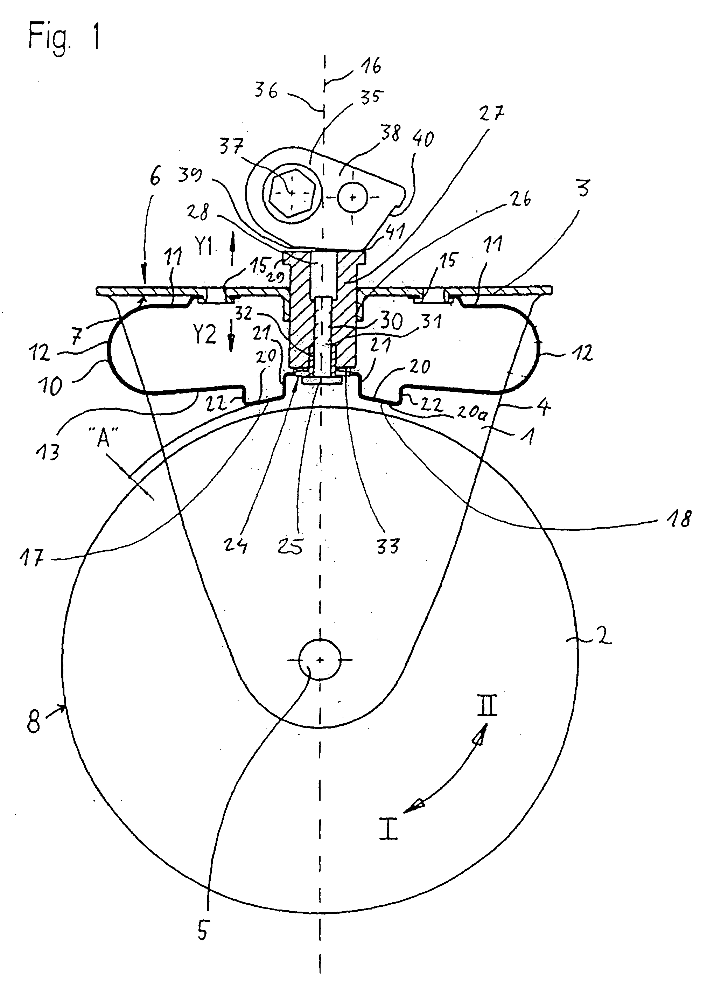

Fig. 1 zeigt die Lenk- oder Bockrolle im ausgerückten Zustand. Der Nocken 35 befindet sich in einer etwa horizontalen Stellung, wobei der Stößel 27 von der Bügelfeder 10 nach oben gegen die erste Steuerkante 39 des Nockens 35 gedrückt wird. Die Bügelfeder 10 ist mit ihren zwei Bremsbacken 17, 18, insbesondere deren Bodenwandungen 20, mit einem Abstand A von dem Umfang bzw. der Lauffläche 8 des Rades 2 angeordnet.

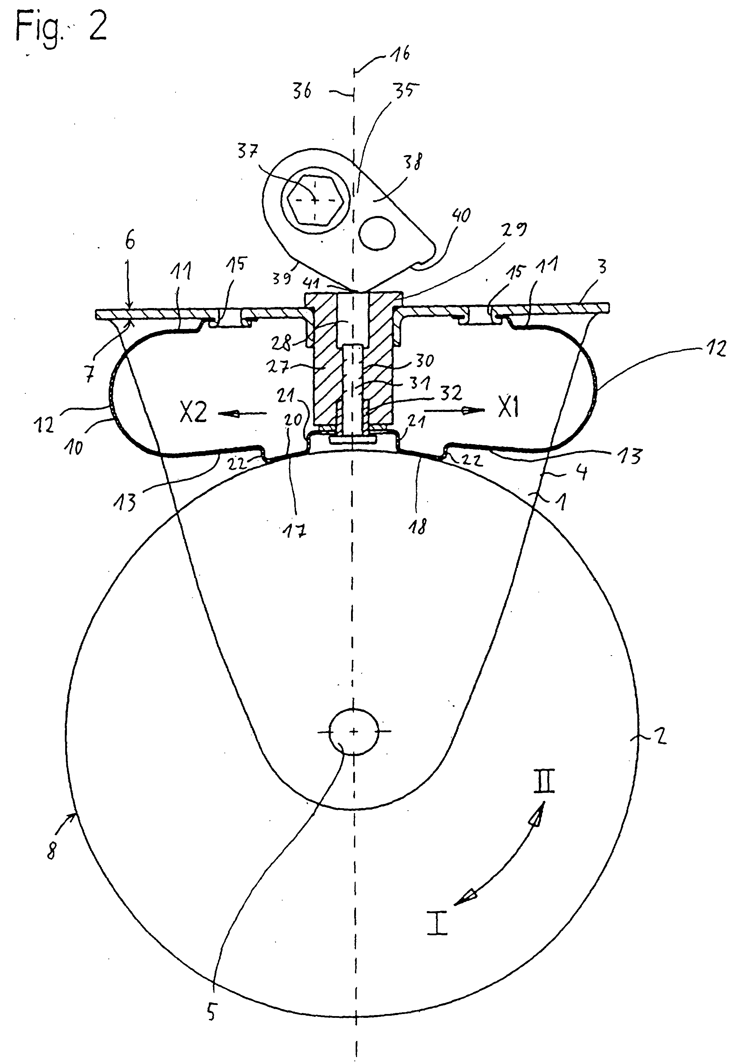

In den eingerückten Zustand wird die Lenk- oder Bockrolle durch Schwenken des Nockens 35 um seine Schwenkachse 37 nach unten überführt (Fig. 2), wobei die Steuerkanten 39, 40 bzw. die Steuerecke 41 den Stößel gegen die Federkraft der Bügelfeder 10 nach unten drücken, so daß die Bremsbacken 17, 18 mit ihren Bodenwandungen 20 gegen die Lauffläche 8 der Rolle 2 mit einer vorbestimmten Anpreßkraft beaufschlagt sind. Der Nocken 35 ist vorzugsweise so ausgebildet, daß er in dieser Bremsstellung einrastet.

Wird das Rad 2 mit einem Drehmoment beaufschlagt, so dreht es sich geringfügig, wobei die entlang dem Langloch 24 verschiebbar an dem Stößel 27 gelagerte Bügelfeder 10 auf Grund des Reibschlusses zwischen dem Rad 2 und den Bremsbacken 17, 18 mitgenommen wird. Einer der beiden Bremsbacken 17, 18 wird in Richtung zur Mittelebene 16 bzw. zum Stößel 27 verschoben. Wird das Rad 2 in Richtung I (Fig. 2) gedreht, so wird der Bremssteg 13 in Richtung X1 und damit der in Fig. 2 linke Bremsbacken 17 zur Mittelebene 16 verschoben. Wird das Rad 2 in Richtung II (Fig. 2) gedreht, so wird der Bremssteg 13 in Richtung X2 und damit der in Fig. 2 rechte Bremsbacken 18 zur Mittelebene 16 verschoben.

Der in Richtung zur Mittelebene 16 bzw. zum Stößel 27 verschobene Bremsbacken 17, 18 wirkt wie ein Keil, der sich zwischen dem zur Mittelebene 16 abnehmenden Abstand zwischen der Lauffläche 8 und der unteren Stirnfläche des Stößels 27 einspreizt, wodurch die Anpreßkraft, mit welcher der Bremsbacken 17, 18 gegen die Lauffläche gedrückt wird, wesentlich erhöht wird. Demgemäß erhöht sich auch der Reibschluß zwischen dem Bremsbacken 17, 18 und der Lauffläche 8, wodurch ein großes Bremsmoment ausgeübt wird, das einem entsprechend hohen an das Rad 2 anliegenden Drehmoment entgegenwirken kann.

Durch die Keilwirkung der erfindungsgemäßen Lenk- oder Bockrolle können somit erhebliche Bremsmomente ausgeübt werden, wobei die Stellkraft zum Betätigen des Nockens 35 relativ gering und unabhängig von dem ausgeübten Bremsmoment ist. Das Bremsmoment erhöht sich vielmehr selbsttätig in dem Maße, wie das an das Rad 2 anliegende Drehmoment zunimmt.

Die oben beispielhaft beschriebene Ausführungsform ist aufgrund ihres einfachen und wartungsarmen Aufbaus besonders für Bockrollen geeignet. Die als Bremselement dienende Bügelfeder kann auch durch ein anderes Bremselement, z.B. einen oder zwei massive Bremskeile ersetzt werden, die an einem Betätigungselement in Laufrichtung des Rades verschiebbar gelagert sind und durch das Betätigungselement gegen den Umfang bzw. die Lauffläche des Rades gedrückt werden können, so daß sich einer der Bremskeile zwischen der Rolle und dem Betätigungselement verkeilt. Im Rahmen der Erfindung liegt jedes Betätigungslement, das eine vorbestimmte Translationsbewegung ausüben kann und vorzugsweise in der Bremsstellung verrast- oder verriegelbar ist. Ist nur ein Bremsmoment in einer Richtung notwendig, so kann lediglich ein einziger Bremsbacken an der Lenk- oder Bockrolle vorgesehen werden.

## Patentansprüche

1. Lenk- oder Bockrolle mit einem darin gehalterten Rad (2) und einer Bremsvorrichtung, die mittels einer Zustelleinrichtung in Richtung auf eine Andruckstelle auf den Umfang (8) des Rades (2) und deren Bremsbacken (17, 18) mit einer vorgegebenen Kraft andrückbar sind, wobei in Umfangsrichtung beiderseits der Andruckstelle der Bremsvorrichtung des Rades im Bereich der Andruckstelle Bremsbacken angeordnet sind, die sich in Umfangsrichtung des Rades (2) erstrecken und in dieser Lage relativ zur Bodenplatte (3) so gehalten sind, so daß sie sich nicht aus der Ebene des Rades herausdrehen, aber in Umfangsrichtung der Rader bewegen können, **dadurch gekennzeichnet,**
- daß als Bremsvorrichtung eine im Querschnitt etwa C-förmige Bügelfeder (10) vorgesehen ist;
- daß jedes deren beiden C-Enden (11) an der Bodenplatte (3) der Rolle festgelegt und deren dazwischenliegender bogenförmiger C-Bereich an der Andruckstelle mittels der Zustelleinrichtung in Richtung auf den Umfang (8) des Rades (2) andrückbar ist
- und daß beiderseits der Andruckstelle zumindest je einer der bis auf den Umfang (8) des Rades (2) zum Bremsen bewegbaren Bremsbacken (17, 18) an der Bügelfeder (10) vorgesehen ist.

2. Lenk- oder Bockrolle nach Anspruch 1, **dadurch gekennzeichnet, daß** die Zustelleinrichtung als ein im wesentlichen radial zu dem Rad (2) zustellbares Betätigungselement (27) ausgebildet ist.

3. Lenk- oder Bockrolle nach Anspruch 2, **dadurch gekennzeichnet, daß** im Andrückbereich der Bügelfeder (10) ein sich in Richtung zwischen den beiden C-Enden erstreckendes Langloch vorgesehen ist, das von dem freien Ende des Betätigungselements (27) durch- und hintergriffen sowie abgestützt ist.

4. Lenk- oder Bockrolle nach einem der Ansprüche 2 oder 3, **dadurch gekennzeichnet, daß** zwei Bremsbacken (17, 18) an dem Betätigungselement (27) entlang der Umfangsfläche (8) des Rades (2) am Betätigungselement (27) verschiebbar gelagert sind, wobei einer der Bremsbacken (17, 18) in einer Drehrichtung des Rades (2) vor und der andere Bremsbacken (18, 17) hinter dem Betätigungselement (27) angeordnet ist.

5. Lenk- oder Bockrolle nach einem der Ansprüche 2 bis 4, **dadurch gekennzeichnet, daß** der oder die Bremsbacken (17, 18) eine etwa parallel zur Umfangsfläche (8) des Rades (2) angeordnete Bremsfläche (20a) aufweisen.

6. Lenk- oder Bockrolle nach einem der Ansprüche 2 bis 5, **dadurch gekennzeichnet, daß** der oder die Bremsbacken (17, 18) an der Bügelfeder (10) als nutförmige Vorsprung bzw. Vorsprünge angeformt sind.

7. Lenk- oder Bockrolle nach Anspruch 6, **dadurch gekennzeichnet, daß** die Bügelfeder (10) aus einem Federblechstreifen ausgebildet ist, der an seinen beiden Endbereichen (11) umgebogen ist, so daß die Bügelfeder (10) in der Seitenansicht eine langgestreckte, etwa ovale C-Form mit zwei Biegungen (12) und einem etwa geradlinigen Bremssteg (13) aufweist, an dem der oder die Bremsbacken (17, 18) ausgebildet sind.

8. Lenk- oder Bockrolle nach Anspruch 6 unter Einschluß von Anspruch 3, **dadurch gekennzeichnet, daß** etwa in der Längsmitte des Bremssteges (13) das Langloch (24) eingebracht ist, das in Längsrichtung des Bremssteges (13) angeordnet ist.

9. Lenk- oder Bockrolle nach einem der Ansprüche 2 oder 3 bis 9 unter Einschluß von Anspruch 2, **dadurch gekennzeichnet, daß** das Betätigungselement ein Stößel (27) ist, der radial zum Rad (2) angeordnet und verschiebbar gelagert ist.

10. Lenk- oder Bockrolle nach Anspruch 9, **dadurch gekennzeichnet, daß** der Stößel (27) zylinderförmig ist und eine längsmittige Bohrung (28) aufweist, in der ein Gewindeabschnitt (30) ausgebildet ist, der einen etwas geringeren Durchmesser als die übrige Bohrung (28) aufweist und von dem zum Rad (2) zeigenden Ende des Stößels etwas versetzt angeordnet ist.

11. Lenk- oder Bockrolle nach Anspruch 8 und 10, **dadurch gekennzeichnet, daß** in den Gewindeabschnitt (30) eine Schraube (31) eingeschraubt und eine die Schraube (31) umfassende Hülse (32) in die Bohrung (28) eingesetzt ist, wobei die Schraube (31) und die Hülse (32) das Langloch (24) der Bügelfeder durchgreifen, wobei die Hülse (32) so lang bemessen ist, daß ein Kopf der Schraube (31) mit Abstand zum Stößel (27) angeordnet ist und die Bügelfeder (10) nicht am Stößel festgeklemmt ist.

12. Lenk- oder Bockrolle nach einem der Ansprüche 9 bis 11, **dadurch gekennzeichnet, daß** an dem von dem Rad (2) entfernten Endbereich des Stößels (27) ein Nocken (35) zum Betätigen des Stößels (27) angeordnet ist.

13. Lenk- oder Bockrolle nach Anspruch 11, **dadurch gekennzeichnet, daß** der Nocken (35) in der Seitenansicht einen etwa rechteckigen, sich über den Stößel (27) erstreckenden Nockenkörper (38) aufweist, an dem an seiner unteren Längsseitenkante eine erste Steuerkante (39) und an seiner von der Schwenkachse (37) entfernt angeordneten Stirnkante eine zweite Steuerkante (40) ausgebildet ist, wobei die beiden Steuerkanten (39, 40) an einer Steuerkantenecke (41) aneinanderstoßen und vorzugsweise einen stumpfen Winkel begrenzen.

14. Lenk- oder Bockrolle nach einem der Ansprüche 11 bis 13, **dadurch gekennzeichnet, daß** der Nocken (35) in einer Bremsstellung verrastbar oder verriegelbar ist.

15. Lenk- oder Bockrolle nach einem der Ansprüche 1 bis 14, **dadurch gekennzeichnet, daß** die Umfangsfläche des Rades (2) die Lauffläche (8) desselben darstellt.

## Claims

1. A castor or support wheel assembly comprising a wheel (2) mounted therein and a braking device which by means of a displacement device can be pressed in the direction of a contact location on the periphery (8) of the wheel (2) and the brake shoes (17, 18) thereof with a predetermined force, wherein arranged in the peripheral direction on both sides of the contact location of the braking device of the wheel in the region of the contact location are brake shoes which extend in the peripheral direction of the wheel (2) and which are held in that position relative to the base plate (3) so that they do not rotate out of the plane of the wheel but can move in the peripheral direction of the wheel, **characterised in that**
- a loop spring (10) which is approximately C-shaped in cross-section is provided as the braking device;
- each of the two ends (11) of the C-shape thereof are fixed to the base plate (3) of the wheel assembly and the arcuate region of the C-shape which is therebetween can be pressed in a direction towards the periphery (8) of the wheel (2) at the contact location by means of the displacement device, and
- at least one respective one of the brake shoes (17, 18) which are movable on to the periphery (8) of the wheel (2) for the braking effect is provided at the loop spring (10) on both sides of the contact location.

2. A castor or support wheel assembly according to claim 1 **characterised in that** the displacement device is in the form of an actuating element (27) which is displaceable substantially radially with respect to the wheel (2).

3. A castor or support wheel assembly according to claim 2 **characterised in that** provided in the contact pressure region of the loop spring (10) is a slot which extends in a direction between the two ends of the C-shape and which has the free end of the actuating element (27) engaging therethrough and therebehind and is supported thereby.

4. A castor or support wheel assembly according to one of claims 2 and 3 **characterised in that** two brake shoes (17, 18) are mounted to the actuating element (27) displaceably along the peripheral surface (8) of the wheel (2) at the actuating element (27), wherein one of the brake shoes (17, 18) is arranged in front of the actuating element (27) in a direction of rotation of the wheel (2) and the other brake shoe (18, 17) is arranged behind the actuating element (27).

5. A castor or support wheel assembly according to one of claims 2 to 4 **characterised in that** the brake shoe or shoes (17, 18) has or have a brake surface (20a) arranged substantially parallel to the peripheral surface (8) of the wheel (2).

6. A castor or support wheel assembly according to one of claims 2 to 5 **characterised in that** the brake shoe or shoes (17, 18) is or are formed on the loop spring (10) in the form of a groove-shaped projection or projections.

7. A castor or support wheel assembly according to claim 6 **characterised in that** the loop spring (10) is formed from a spring sheet strip which is bent over at its two end regions (11) so that in the side view the loop spring (10) is of an elongate, substantially oval C-shape with two bends (12) and has a substantially rectilinear braking limb (13) on which the brake shoe or shoes (17, 18) are provided.

8. A castor or support wheel assembly according to claim 6 with the inclusion of claim 3 **characterised in that** the slot (24) which is arranged in the longitudinal direction of the braking limb (13) is disposed approximately at the longitudinal centre of the braking limb (13).

9. A castor or support wheel assembly according to one of claims 2 or 3 to 9 with the inclusion of claim 2 **characterised in that** the actuating element is a thrust member (27) which is arranged and mounted displaceably radially with respect to the wheel (2).

10. A castor or support wheel assembly according to claim 9 **characterised in that** the thrust member (27) is cylindrical and has a longitudinal central bore (28) in which there is a screwthreaded portion (30) which is of a somewhat smaller diameter than the rest of the bore (28) and which is arranged displaced somewhat from the end of the thrust member, which points towards the wheel (2).

11. A castor or support wheel assembly according to claim 8 and claim 10 **characterised in that** a screw (31) is screwed into the screwthreaded portion (30) and a sleeve (32) enclosing the screw (31) is fitted into the bore (28), wherein the screw (31) and the sleeve (32) engage through the slot (24) in the loop spring, wherein the sleeve (32) is of such a length that a head of the screw (31) is arranged at a spacing relative to the thrust member (27) and the loop spring (10) is not clamped fast to the thrust member.

12. A castor or support wheel assembly according to one of claims 9 to 11 **characterised in that** arranged at the end region of the thrust member (27), which is remote from the wheel (2), is a cam (35) for actuating the thrust member (27).

13. A castor or support wheel assembly according to claim 11 **characterised in that** the cam (38) in side view has a substantially rectangular cam body (38) which extends over the thrust member (27) and on which a first control edge (27) is provided at its lower longitudinal side edge and a second control edge (40) is provided at its end edge arranged remote from the pivot axis (37), wherein the two control edges (39, 40) meet at a control edge corner (41) and preferably delimit an obtuse angle.

14. A castor or support wheel assembly according to one of claims 11 to 13 **characterised in that** the cam (35) can be locked or latched in its braking position.

15. A castor or support wheel assembly according to one of claims 1 to 14 **characterised in that** the peripheral surface of the wheel (2) represents the running surface (8) thereof.

## Revendications

1. Roulette orientable ou fixe comprenant un galet (2) monté intérieurement et un dispositif de freinage dont les mâchoires de frein (17, 18) peuvent être pressées avec une force prédéterminée, au moyen d'un dispositif de rapprochement en direction d'une zone de pression vers la circonférence (8) du galet (2) dans laquelle des mâchoires de frein sont disposées, dans la région de la zone de pression, des deux côtés de la zone de pression du dispositif de freinage du galet dans la direction circonférentielle du galet, lesquelles mâchoires s'étendent dans la direction circonférentielle du galet (2) et sont maintenues dans cette position par rapport à la plaque de base (3), de telle manière qu'elles ne puissent pas s'écarter du plan du galet mais qu'elles puissent se déplacer dans la direction circonférentielle du galet, **caractérisée**
- en qu'il est prévu comme dispositif de freinage un ressort en arceau (10) à peu près en forme de C en section transversale ;
- en ce que chacune des deux extrémités (11) du C de ce ressort est fixée à la plaque de base (3) de la roulette et que la région en forme d'arc du C de ce ressort qui est située entre ces extrémités, peut être pressée dans la zone de pression en direction de la circonférence (8) du galet (2), au moyen du dispositif de rapprochement ;
- et en ce qu'il est prévu sur le ressort en arceau (10), sur chacun des deux côtés de la zone de pression, au moins une des mâchoires de frein (17, 18) qui peuvent se déplacer jusque sur la circonférence (8) du galet (2) pour assurer le freinage.

2. Roulette orientable ou fixe selon la revendication 1, **caractérisée en ce que** le dispositif de rapprochement est constitué par un élément d'actionnement (27) qui peut être avancé sensiblement radialement par apport au galet (2).

3. Roulette orientable ou fixe selon la revendication 2, **caractérisée en ce que**, dans la région de pression du ressort en arceau (10) est prévu un trou allongé qui s'étend dans la direction orientée entre les deux extrémités du C, et qui est traversé et accroché par l'arrière ainsi que soutenu, par l'extrémité libre de l'élément d'actionnement (27).

4. Roulette orientable ou fixe selon une des revendications 2 ou 3, **caractérisée en ce que** deux mâchoires de frein (17, 18) sont montées sur l'élément d'actionnement (27) avec possibilité de translation le long de la surface périphérique (8) du galet (2) au niveau de l'élément d'actionnement (27), une des mâchoires de frein (17, 18) étant disposée en avant de l'élément d'actionnement et l'autre mâchoire de frein (18, 17) en arrière de l'élément d'actionnement (27), considéré dans le sens de la rotation du galet (2).

5. Roulette orientable ou fixe selon une des revendications 2 à 4, **caractérisée en ce que** la ou les mâchoires de frein (17, 18) présente(nt) une surface de freinage (20a) disposée à peu près parallèlement à la surface circonférentielle (8) du galet (2).

6. Roulette orientable ou fixe selon une des revendications 2 à 5, **caractérisée en ce que** la ou les mâchoires de frein (17, 18) est ou sont formée(s) sur le ressort en arceau (10) sous la forme d'une saillie en forme de cannelure.

7. Roulette orientable ou fixe selon la revendication 6, **caractérisée en ce que** le ressort en arceau (10) est constitué par une bande de tôle à ressorts qui est recourbée dans ses deux régions d'extrémité (11) de telle manière que le ressort en arceau (10) présente, dans une vue de côté, une forme de C allongé, à peu près ovale, munie de deux courbures (12) et d'une barrette de frein (13) à peu près rectiligne, sur laquelle la ou les mâchoire(s) de frein (17, 18) sont formées.

8. Roulette orientable ou fixe selon la revendication 6 avec incorporation de la revendication 3, **caractérisée en ce qu'**à peu près au milieu de la longueur de la barrette de frein (13), est pratiqué le trou allongé (24) qui est disposé dans la direction longitudinale de la barrette de frein (13).

9. Roulette orientable ou fixe selon une des revendications 2 ou 3 à 9 avec incorporation de la revendication 2, **caractérisée en ce que** l'élément d'actionnement est un poussoir (27) qui est disposé et monté mobile en translation radialement par rapport au galet (2).

10. Roulette orientable ou fixe selon la revendication 9, **caractérisée en ce que** le poussoir (27) est de forme cylindrique et présente un perçage médian longitudinal (28) dans lequel est formé un segment fileté (30) qui présente un diamètre un peu plus petit que celui du reste du perçage (28) et est disposé légèrement décalé par rapport à l'extrémité du poussoir qui pointe vers le galet (2).

11. Roulette orientable ou fixe selon la revendication 8 et 10, **caractérisée en ce qu'**une vis (31) est vissée dans le segment fileté (30) et une douille (32) qui entoure la vis (31) est engagée dans le perçage (28), la vis (31) et la douille (32) traversant le trou allongé (24) du ressort en arceau, la douille (32) étant d'une longueur telle qu'une tête de la vis (31) soit disposée à distance du poussoir (27) et que le ressort en arceau (10) ne soit pas coincé contre le poussoir.

12. Roulette orientable ou fixe selon une des revendications 9 à 11, **caractérisée en ce qu'**une came (35) destinée à l'actionnement du poussoir (27) est disposée au droit de la région d'extrémité du poussoir (27) qui est éloignée du galet (2).

13. Roulette orientable ou fixe selon la revendication 11, **caractérisée en ce que** la came (35) présente, en vue de côté, un corps de came (38) à peu près rectangulaire, qui s'étend au-dessus du poussoir (27), sur lequel un premier bord de commande (39) est formé le long de son bord latéral longitudinal inférieur, tandis que, sur son bord frontal disposé éloigné de l'axe de pivotement (37), est formé un deuxième bord de commande (40), les deux bords de commande (39, 40) se rejoignant à un coin de bords de commande (41) et formant de préférence un angle obtus.

14. Roulette orientable ou fixe selon une des revendications 11 à 13, **caractérisée en ce que** la came (35) peut être arrêtée ou verrouillée dans une position de freinage.

15. Roulette orientable ou fixe selon une des revendications 1 à 14, **caractérisée en ce que** la surface circonférentielle du galet (2) représente la surface de roulement (8) de ce galet.
